(19) Europäisches Patentamt
European Patent Office
Office européen des brevets

(11) **EP 4 769 518 A1**

(12) **EUROPEAN PATENT APPLICATION**
published in accordance with Art. 153(4) EPC

(43) Date of publication:
**01.07.2026 Bulletin 2026/27**

(21) Application number: **24891866.6**

(22) Date of filing: **13.11.2024**

(51) International Patent Classification (IPC):
$H01M\ 4/131^{(2010.01)}$    $H01M\ 4/525^{(2010.01)}$
$H01M\ 4/505^{(2010.01)}$    $H01M\ 10/052^{(2010.01)}$
$H01M\ 4/02^{(2006.01)}$

(52) Cooperative Patent Classification (CPC):
**H01M 4/02; H01M 4/131; H01M 4/505;
H01M 4/525; H01M 10/052;** Y02E 60/10

(86) International application number:
**PCT/KR2024/096530**

(87) International publication number:
**WO 2025/105920 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 KR 20230156383
12.11.2024 KR 20240160276**

(71) Applicant: **LG Energy Solution, Ltd.
Seoul 07335 (KR)**

(72) Inventors:
• **YUN, So Yeong**
**Daejeon 34122 (KR)**
• **KIM, Ji Hye**
**Daejeon 34122 (KR)**
• **HEO, Jong Wook**
**Daejeon 34122 (KR)**
• **JEONG, Mi Hee**
**Daejeon 34122 (KR)**
• **YU, Jun Woo**
**Daejeon 34122 (KR)**
• **PARK, Byung Chun**
**Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE AND LITHIUM SECONDARY BATTERY COMPRISING SAME**

(57)    The present invention relates to a positive electrode comprising a positive electrode material containing a single-particle form lithium nickel-based oxide containing Y and Zr, and having a preferred orientation index of 1.2 to 1.8 according to Equation 1, and a lithium secondary battery comprising the positive electrode.

[FIG. 1]

5.0kV 12.7mm x5.00k SE(M)      10.0um

EP 4 769 518 A1

**Description**

**TECHNICAL FIELD**

This application claims the benefit of Korean Patent Application Nos. 10-2023-0156383, filed on November 13, 2023, and 10-2024-0160276, filed on November 12, 2024, in the Korean Intellectual Property Office, the contents of which are incorporated herein by reference.

The present invention relates to a positive electrode including a single-particle form positive electrode material and having controlled preferred orientation index, and a lithium secondary battery comprising the positive electrode.

**BACKGROUND ART**

Lithium secondary batteries are generally composed of a positive electrode, a negative electrode, a separator, and an electrolyte, and the positive electrode and negative electrode include active materials capable of intercalation and deintercalation of lithium ions.

Among them, as positive electrode materials, lithium nickel-based oxides containing two or more transition metals, which have been developed to complement the problems of lithium nickel-based oxides containing only Ni, Co, or Mn, are in the spotlight, and among them, lithium nickel cobalt manganese oxide containing Ni, Co, and Mn is widely used in the field of electric vehicle batteries.

The conventional lithium nickel cobalt manganese oxides are generally in the form of spherical secondary particles in which tens to hundreds of primary particles are aggregated. However, in the case where lithium nickel cobalt manganese oxides in the form of secondary particles in which many primary particles are aggregated are applied, there is a problem that the primary particles are easily broken during a rolling process during the positive electrode manufacturing process, and cracks occur inside the particles during charge and discharge processes. If the positive electrode material particle breaks or cracks occur, the contact area with an electrolyte increases, which increases gas generation and positive electrode material deterioration due to side reactions with the electrolyte, to reduce the life characteristics.

In order to solve the problems, a technology has been proposed to manufacture a positive electrode material in the form of a single particle rather than a secondary particle by increasing the calcining temperature during manufacturing the lithium nickel cobalt manganese oxide. The positive electrode material in the form of a single particle has the advantage of having a smaller contact area with the electrolyte than the conventional positive electrode material in the form of a secondary particle, so that side reaction with the electrolyte is less, and particle strength is excellent, so that the particle breakage is less during the manufacture of the electrode. Therefore, in the case where the positive electrode material in the form of a single particle is applied, the high-temperature performance of a battery may be improved. However, the conventional positive electrode material in the form of a single particle has high resistance, so if applied, there is a limitation that the output characteristics are reduced.

**DISCLOSURE OF THE INVENTION**

**TECHNICAL PROBLEM**

The present invention provides a positive electrode having a controlled preferred orientation by including a positive electrode material having a controlled particle form and doping element, thereby simultaneously improving the high-temperature life and output characteristics of a lithium secondary battery.

**TECHNICAL SOLUTION**

[1] The present invention provides a positive electrode comprising a positive electrode material comprising a single-particle form lithium nickel-based oxide comprising Y and Zr, the positive electrode having a preferred orientation index of 1.2 to 1.8 according to Equation 1 below.

[Equation 1]

$$Preferred\ orientation\ index = \frac{I'(003)/I'(104)}{I(003)/I(104)}$$

In Equation 1,

I(003)/I(104) is a ratio of the peak intensity I(003) of a (003) plane to the peak intensity I(104) of a (104) plane, obtained by XRD analysis of the positive electrode material, and
I' (003)/I' (104) is a ratio of the peak intensity I' (003) of a (003) plane to the peak intensity I'(104) of a (104) plane, obtained by XRD analysis of the positive electrode.

[2] The present invention provides the positive electrode according to [1], wherein the positive electrode material has a degree of single particlization of 2.0 to 4.5 according to Equation 2 below.

[Equation 2]

$$Degree\ of\ single\ particlization = \frac{\sum_{i=1}^{n} \frac{4\pi}{3} \times R_i^3}{n}$$

In Equation 2,

$R_i$ is the radius of an i-th grain, measured by subjecting an electrode manufactured by applying the positive electrode material to ion milling and then analyzing the electrode by electron backscatter diffraction (EBSD), where although the value is measured in a $\mu$m unit, the value substituted into Equation 2 is a unitless number that does not include a unit, and
n is a total number of grains measured through the EBSD analysis and is 350 to 450.

[3] The present invention provides the positive electrode according to [1] or [2], wherein $D_{50}$ of the positive electrode material is 1.0 $\mu$m to 6.0 $\mu$m.
[4] The present invention provides the positive electrode according to at least one of [1] to [3], wherein Y is comprised in a weight of 200 ppm to 800 ppm based on a total weight of the lithium nickel-based oxide.
[5] The present invention provides the positive electrode according to at least one of [1] to [4], wherein Zr is comprised in a weight of 1,000 ppm to 3,000 ppm based on a total weight of the lithium nickel-based oxide.
[6] The present invention provides the positive electrode according to at least one of [1] to [5], wherein the lithium nickel-based oxide has a composition of Formula 1 below.

[Formula 1]    $Li_a Ni_{1-x-y} Co_x M1_y M2_w O_2$

In Formula 1,

$1.0 \leq a \leq 1.5$, $0 \leq x \leq 0.2$, $0 \leq y \leq 0.2$, $0 < w \leq 0.1$, and $0 < x+y \leq 0.2$,
M1 is one or more selected from the group consisting of Mn and Al, and
M2 is two or more selected from the group consisting of Y, Zr, Ba, Ca, Ti, Mg, Ta, Nb, and Mo, where Y and Zr are necessarily included.

[7] The present invention provides the positive electrode according to at least one of [1] to [6], wherein I(003)/I(104) of Equation 1 is 1.0 to 1.6.
[8] The present invention provides the positive electrode according to at least one of [1] to [7], wherein I' (003)/I' (104) of Equation 1 is 1.2 to 2.9.
[9] The present invention provides the positive electrode according to at least one of [1] to [8], wherein the positive electrode comprises a positive electrode current collector; and a positive electrode mixture layer provided on the positive electrode current collector and comprising the positive electrode material, and a porosity of the positive electrode mixture layer is 10% to 32%.

[10] The present invention provides a lithium secondary battery comprising: the positive electrode according to at least one of [1] to [9]; a negative electrode comprising a negative electrode active material; a separator disposed between the positive electrode and the negative electrode; and an electrolyte.

## ADVANTAGEOUS EFFECTS

The positive electrode according to an embodiment of the present invention includes a single-particle form lithium nickel-based oxide having superior particle strength compared to secondary particles as a positive electrode material, so the positive electrode may withstand strong rolling conditions during a manufacturing process, and thus has the advantage of excellent energy density per unit volume.

In addition, since the amount of fine particles generated due to particle breakage of the positive electrode material is small, a battery using the positive electrode has excellent lifespan at high temperatures.

In addition, the positive electrode material has a high nickel content, so has excellent capacity, and may reduce the amount of cobalt used, so is advantageous in terms of material supply and price.

In addition, since the positive electrode material has a high degree of single particlization and a controlled preferential orientation, an electrode including the positive electrode material exhibits high ion conductivity, which may contribute to improving the output characteristics of a battery.

## BRIED DESCRIPTION OF DRAWINGS

FIG. 1 is an SEM image of the positive electrode material powder produced in Example 1.
FIG. 2 is an SEM image of the positive electrode material powder produced in Example 2.
FIG. 3 is an SEM image of the positive electrode material powder produced in Comparative Example 1.
FIG. 4 is an SEM image of the positive electrode material powder produced in Comparative Example 2.
FIG. 5 is an SEM image of the positive electrode material powder produced in Comparative Example 3.
FIG. 6 is an SEM image of the positive electrode material powder produced in Comparative Example 4.
FIG. 7 is an SEM image of the positive electrode material powder produced in Comparative Example 5.
FIG. 8 is an EBSD map of a cross-section of an electrode manufactured using the positive electrode material powder of Example 1.
FIG. 9 is an EBSD map of a cross-section of an electrode manufactured using the positive electrode material powder of Example 2.
FIG. 10 is an EBSD map of a cross section of an electrode manufactured using the positive electrode material powder of Comparative Example 1.
FIG. 11 is an EBSD map of a cross section of an electrode manufactured using the positive electrode material powder of Comparative Example 2.
FIG. 12 is an EBSD map of a cross section of an electrode manufactured using the positive electrode material powder of Comparative Example 3.
FIG. 13 is an EBSD map of a cross section of an electrode manufactured using the positive electrode material powder of Comparative Example 4.
FIG. 14 is an EBSD map of a cross section of an electrode manufactured using the positive electrode material powder of Comparative Example 5.

## BEST MODE FOR CARRYING OUT THE INVENTION

Hereinafter, the present invention will be explained in more detail to assist the understanding of the present invention.

In the present invention, "single-particle form" means a particle composed of 30 or fewer nodules, and is a concept including a single particle composed of one nodule and a pseudo-single particle which is a composite of 2 to 30 nodules.

The "nodule" is a lower particle unit that constitutes a single particle and a pseudo-single particle, and may be a single crystal without a crystalline grain boundary, or a polycrystal that does not have a grain boundary in appearance if observed with a scanning electron microscope at a magnification of 5,000 to 20,000 times.

In the present invention, "secondary particle" means a particle formed by aggregation of a plurality of primary particles, for example, tens to hundreds of primary particles. Specifically, the secondary particle may be an aggregate of more than 30 primary particles.

In the present invention, "particle" is a concept including any one or all of a single particle, a pseudo-single particle, a primary particle, a nodule, and a secondary particle.

In the present invention, "$D_{50}$" means a particle diameter corresponding to 50% of the volume accumulation in particle size distribution of corresponding particle powder, and may be measured using a laser diffraction method. For example, the particle diameter may be obtained by dispersing a positive electrode material powder in a dispersion medium, introducing the dispersion into a commercially available laser diffraction particle size measuring device (for example, S-3500 of Microtrac Co.), irradiating ultrasonic waves of about 28 kHz at an output of 60 W, obtaining a volume accumulation particle size distribution graph, and obtaining the particle diameter at a point where the volume accumulation amount is 50% in the obtained volume accumulation particle size distribution graph.

In the present invention, "grain" is a particle unit having the same crystal orientation, and is the smallest particle unit recognized as a single lump in an Electron BackScatter Diffraction (EBSD) map image. The size of the grain may be measured by image analysis of the EBSD map.

In the present invention, "X-ray diffraction analysis (XRD)" was performed by analyzing diffraction grating produced by irradiating a measurement target sample with X-rays. Specifically, the measurement target sample was fixed to a holder, and then X-ray diffraction analysis was performed using a Bruker D8 Endeavor (light source: Cu K$\alpha$, $\lambda$ = 1.54 Å) equipped with a LynxEye XE-T position sensitive detector, with a step size of 0.014 degrees and a total scan time of approximately 40 minutes with FDS 0.5° in $2\theta$=10°-90° region. For the measured data, Rietveld refinement was performed considering the charge at each site (+3 for metal ions at a transition metal site, +2 for Ni ions at a Li site) and cation mixing. Instrumental broadening was considered using Fundamental Parameter Approach (FPA) implemented in a Bruker TOPAS program, and the entire peaks of a measurement range were used for fitting. Peak shape was fitted using only the Lorentzian contribution as the First Principle (FP) among the peak types available in TOPAS, and strain was not considered in this case.

The positive electrode according to the present invention comprises a positive electrode material comprising a single-particle form lithium nickel-based oxide containing Y and Zr, and has a preferred orientation index of 1.2 to 1.8 according to Equation 1 below.

[Equation 1]

$$Preferred\ orientation\ index = \frac{I'(003)/I'(104)}{I(003)/I(104)}$$

In Equation 1,

I(003)/I(104) is a ratio of the peak intensity I(003) of a (003) plane to the peak intensity I(104) of a (104) plane, obtained by XRD analysis of the positive electrode material, and
I' (003) /I' (104) is a ratio of the peak intensity I' (003) of a (003) plane to the peak intensity I' (104) of a (104) plane, obtained by XRD analysis of the positive electrode.

Since single-particle form high-nickel positive electrode materials generally have high orientation, if manufacturing an electrode using same, there is a limitation that ion conductivity, which is an indicator of output characteristics, decreases because the particles are preferentially oriented in the same direction within the electrode. However, as described above, if the positive electrode material contains yttrium (Y) and zirconium (Zr) as doping elements, and the preferential orientation index of the positive electrode is adjusted within the numerical range, the defect may be improved.

Specifically, if a lithium nickel-based oxide containing Zr is used as the positive electrode material, the particle size may be increased at the same calcination temperature, and thus the crystallinity and the degree of single particlization of the positive electrode material may be improved, which may contribute to improving the high-temperature lifespan of a battery.

However, a positive electrode material with high crystallinity and high degree of single particlization increases the preferential orientation of the positive electrode, which means that the particles are preferentially arranged in the same direction within the positive electrode, which causes a decrease in the output of a battery.

Accordingly, the inventors of the present invention doped Y together with Zr, and confirmed that the preferred orientation of the positive electrode may be appropriately controlled without hindering the crystallinity and the degree of single particlization of the positive electrode material. The doping of Y contributes to increasing the sphericity of the positive electrode material, and a positive electrode material with a high sphericity may lower the preferred orientation of the positive electrode. Specifically, if the crystallinity and the degree of single particlization are high, growth in a specific direction is prominent, and particles that have grown a lot in a specific direction become oriented if subjected to force in a situation such as electrode rolling. In this case, if the sphericity is high, the particles maintain a shape close to a sphere, so that orientation in the same direction may be prevented to some extent.

Therefore, the positive electrode including such a positive electrode material may have the preferred orientation index, which is an index that reflects both the crystallinity of the positive electrode material and the preferred orientation of the positive electrode, controlled to 1.2 to 1.8.

That is, a battery including the positive electrode may exhibit excellent output characteristics as well as life characteristics at high temperatures.

Hereinafter, each component of the present invention will be described in more detail.

**Positive Electrode Material**

First, the positive electrode material includes a single-particle form lithium nickel-based oxide.

Specifically, the degree of single particlization of the positive electrode material according to Equation 2 below may be 2.0 to 4.5.

[Equation 2]

$$Degree\ of\ single\ particlization = \frac{\sum_{i=1}^{n} \frac{4\pi}{3} \times R_i^3}{n}$$

In Equation 2,

$R_i$ is the radius of an i-th grain measured by subjecting an electrode manufactured by applying the positive electrode material to ion milling and then analyzing the electrode by backscatter electron diffraction (EBSD), where although the value is a value measured in $\mu$m, the value substituted into Equation 2 is a unitless number that does not include a unit, and

n is a total number of grains measured through the EBSD analysis and is 350 to 450.

Since the positive electrode material includes lithium nickel-based oxide particles in the form of single particles or pseudo-single particles, the contact area with an electrolyte is smaller than that of the conventional lithium nickel-based oxides in the form of secondary particle, so that there is less side reaction with the electrolyte, and the particle strength is excellent, and thus, there is an advantage of less particle breakage during rolling during the manufacturing process of a positive electrode.

More specifically, the positive electrode material may have a degree of single particlization of 2.5 or more, 2.8 or more, or 3.0 or more according to Equation 2. A larger degree of single particlization means that there are many particles with a small number of grains in the positive electrode material, that is, particles in the form of single particles, so that there is an effect of improving high-temperature performance. However, if the degree of single particlization exceeds 4.5, the resistance may become excessively high, which may deteriorate output and capacity characteristics, so the value may be 4.5 or less, 4.0 or less, or 3.7 or less.

Meanwhile, the grain radius corresponding to $R_i$ of Equation 1 may be 0.4 $\mu$m to 2.5 $\mu$m, specifically 0.4 $\mu$m to 2.0 $\mu$m, and more specifically 0.4 $\mu$m to 1.0 $\mu$m, and the average grain diameter of the positive electrode material, measured through EBSD may be 0.5 $\mu$m to 4.0 $\mu$m, preferably 0.8 $\mu$m to 2.0 $\mu$m, and more preferably 0.8 $\mu$m to 1.8 $\mu$m. If the average grain diameter of the positive electrode material satisfies the range, a rock salt phase in the lithium nickel-based oxide is reduced, and thus resistance characteristics are more excellent.

In addition, the $D_{50}$ of the positive electrode material may be 1.0 $\mu$m to 6.0 $\mu$m, preferably 1.0 $\mu$m to 5.0 $\mu$m, and more preferably 2.0 $\mu$m to 4.0 $\mu$m. In order to improve high-temperature lifespan and reduce gas generation, $D_{50}$ is preferably 1.0 $\mu$m or more, but considering that a small $D_{50}$ is advantageous in terms of reducing orientation and increasing output, $D_{50}$ is preferably 6.0 $\mu$m or less.

Meanwhile, the lithium nickel-based oxide contains Y and Zr as doping elements. By including Y as a doping element, the effect of lowering the preferred orientation of the positive electrode may be achieved, and by including Zr, the effect of increasing the degree of single particlization of the positive electrode material may be achieved.

Specifically, Y may be included in a weight of 200 ppm or more, 300 ppm or more, or 400 ppm or more based on the total weight of the lithium nickel-based oxide, and in this case, it is preferable in improving the sphericity and lowering the preferred orientation degree. However, considering the capacity characteristics of the positive electrode material, preferably, the weight does not exceed 800 ppm.

In addition, Zr may be included in a weight of 1,000 ppm or more, 1,200 ppm or more, or 1,500 ppm or more based on the total weight of the lithium nickel-based oxide, and in this case, it is preferable in improving the degree of single particlization and controlling the preferred orientation degree so as not to be too low. However, considering the capacity characteristics of the positive electrode material and the decrease in ion conductivity due to the high preferential orientation degree, preferably, the weight does not exceed 3,000 ppm.

Meanwhile, I(003)/I(104) of Equation 1 may be 1.0 to 1.6, preferably 1.1 to 1.6, and more preferably 1.2 to 1.6. I(003)/I(104) of Equation 1 may represent the crystallinity characteristics of the layered structure of the positive electrode material. That is, the larger the I(003)/I(104) value, the better the layered structure grew and the less the cation mixing phenomenon between lithium ions and nickel ions. Therefore, it is preferable that the I(003)/I(104) value of Equation 1 is within the range, in indicating that the layered structure grew well in the form of a single crystal.

Meanwhile, according to an embodiment of the present invention, the content of nickel among the metals other than lithium in the lithium nickel-based oxide may be 70 mol% or more, preferably 80 mol% or more, more preferably 90 mol% or more, but may be 99 mol% or less. In this case, there is an advantage of being able to achieve high capacity.

In addition, the lithium nickel-based oxide may have a composition of Formula 1 below.

[Formula 1]    $Li_aNi_{1-x-y}Co_xM1_yM2_wO_2$

In Formula 1,

$1.0 \leq a \leq 1.5$, $0 \leq x \leq 0.2$, $0 \leq y \leq 0.2$, $0 < w \leq 0.1$, and $0 < x+y \leq 0.2$,
M1 is one or more selected from the group consisting of Mn and Al, and
M2 is two or more selected from the group consisting of Y, Zr, Ba, Ca, Ti, Mg, Ta, Nb, and Mo, where Y and Zr are necessarily included.
a represents the molar ratio of lithium in the lithium nickel-based oxide, and may be $0 \leq a \leq 0.20$, or $0 \leq a \leq 0.10$. If the molar ratio of lithium satisfies the range, the crystal structure may be stably formed.
1-x-y represents the molar ratio of nickel among the total metals excluding lithium in the lithium nickel-based oxide, and may be $0.80 \leq 1-x-y < 1$, $0.90 \leq 1-x-y < 1$, or $0.92 \leq 1-x-y < 1$. If the molar ratio of nickel satisfies the range, high energy density is exhibited, enabling high capacity achievement.
x represents the molar ratio of cobalt among the total metals excluding lithium in the lithium nickel-based oxide, and may be $0 < x \leq 0.12$, $0 < x \leq 0.06$, or $0 < x \leq 0.05$. If the molar ratio of cobalt satisfies the range, good resistance characteristics and output characteristics may be achieved.
y represents the molar ratio of M1 among the total metals excluding lithium in the lithium nickel-based oxide, and may be $0 < y \leq 0.08$, $0 < y \leq 0.04$, or $0 < y \leq 0.03$. If the molar ratio of M1 satisfies the range, the structural stability of the positive electrode material is excellent.
w represents the molar ratio of M2 among the total metals excluding lithium in the lithium nickel-based oxide, and w may be $0 < w \leq 0.08$, $0 < w \leq 0.05$, or $0 < w \leq 0.03$.

Meanwhile, the lithium nickel-based oxide may be produced by mixing a precursor and a lithium raw material and then calcining.

In this case, the precursor may be purchased and used as a commercially available precursor, or produced according to a precursor production method known in the art.

For example, the precursor may be prepared by introducing a transition metal aqueous solution, an ammonium cation complex forming agent, and a basic compound into a reactor and performing a co-precipitation reaction while stirring.

The transition metal aqueous solution may be prepared by dissolving a transition metal-containing raw material in a solvent such as water, and for example, may be prepared by dissolving a nickel-containing raw material, a cobalt-containing raw material, a manganese-containing raw material, an aluminum-containing raw material, an yttrium-containing raw material, and a zirconium-containing raw material in water.

Meanwhile, the transition metal-containing raw material may be the acetate, carbonate, nitrate, sulfate, halide, sulfide, or oxide of a transition metal.

Specifically, the nickel-containing raw material may be, for example, $NiO$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, nickel halides, or a combination thereof.

The cobalt-containing raw material may be, for example, $CoSO_4$, $Co(OCOCH_3)_2 \cdot 4H_2O$, $Co(NO_3)_2 \cdot 6H_2O$, $CoSO_4 \cdot 7H_2O$, or a combination thereof.

The manganese-containing raw material may be, for example, $Mn_2O_3$, $MnO_2$, $Mn_3O_4$, $MnCO_3$, $Mn(NO_3)_2$, $MnSO_4 \cdot H_2O$, manganese acetate, manganese halides, or a combination thereof.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halides, or a combination thereof.

The yttrium-containing raw material may be, for example, $Y_2O_3$, $Y(NO_3)_3 \cdot 6H_2O$, $YCl_3 \cdot 6H_2O$, or a combination thereof.

The zirconium-containing raw material may be, for example, $ZrO_2$, $ZrCl_4$, $Zr(OH)_4$, $Zr(SO_4)_2 \cdot 4H_2O$, $Zr(OC_4H_9)_4$,

or a combination thereof.

However, the cases of the aluminum-, yttrium-, and zirconium-containing raw materials, may be added together with the lithium raw material in a calcining step described below without being added to the transition metal aqueous solution.

In this case, the addition amount of each transition metal-containing raw material may be determined by considering the molar ratio of the transition metal in the positive electrode material to be finally produced.

Meanwhile, the ammonium cation complex forming agent may include one or more compounds selected from the group consisting of $NH_4OH$, $(NH_4)_2SO_4$, $NH_4NO_3$, $NH_4Cl$, $CH_3COONH_4$ and $(NH_4)_2CO_3$, and may be introduced into the reactor in the form of a solution in which the compound is dissolved in a solvent. In this case, the solvent may be water, or a mixture of water and an organic solvent (specifically, alcohol, etc.) that may be homogeneously mixed with water.

The basic compound may be one or more compounds selected from the group consisting of NaOH, KOH, and $Ca(OH)_2$, and may be introduced into the reactor in the form of a solution in which the compound is dissolved in a solvent. In this case, the solvent may be water, or a mixture of water and an organic solvent (specifically, alcohol, etc.) that may be homogeneously mixed with water.

As described above, if the transition metal aqueous solution, ammonium cation complex forming agent, and basic compound are added to the reactor and stirred, the transition metals in the transition metal aqueous solution are coprecipitated, and precursor particles in the form of a transition metal hydroxide may be formed.

In this case, the transition metal aqueous solution, ammonium cation complex forming agent, and basic compound are added in amounts such that the pH of the reaction solution becomes a desired range.

Once the precursor particles are formed in the above-described method, they are separated from the reaction solution to obtain the precursor. For example, the reaction solution is filtered to separate the precursor from the reaction solution, and then the separated precursor is washed and dried to obtain the precursor. In this case, processes such as pulverization and/or classification may be performed as needed.

Next, the precursor and the lithium raw material are mixed and then calcined to produce a lithium nickel-based oxide. In this case, Al and M2 metal-containing raw materials may be mixed together and calcined as needed.

As the lithium raw material, lithium-containing sulfate, nitrate, acetate, carbonate, oxalate, citrate, halide, hydroxide or oxyhydroxide may be used, and for example, $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO_4$, $CH_3COOLi$, $Li_3C_6H_5O_7$ or a mixture thereof may be used.

Meanwhile, the lithium raw material and the precursor may be mixed so that the molar ratio of Li: the total metal in the precursor is 1:1 to 1.2:1, preferably 1:1 to 1.1:1. If the mixing ratio of the lithium raw material and the metal in the precursor satisfies the range, the layered crystal structure of the lithium nickel-based oxide is well developed, so that a positive electrode material having excellent capacity characteristics and structural stability may be produced.

Meanwhile, the calcining is performed at a temperature capable of forming single particles or pseudo-single particles. In order to form single particles or pseudo-single particles, the calcining is required to be performed at a higher temperature than that in the production of the conventional secondary-particle form lithium nickel-based oxide, for example, if the precursor composition is the same, the calcining is required to be performed at a temperature that is about 30°C to 100°C higher than that in the production of the conventional secondary-particle form lithium nickel-based oxide. The calcining temperature for forming single particles or pseudo-single particles may vary depending on the metal composition in the precursor, for example, if forming a high-Ni NCM-based oxide having a Ni content of 80 mol% or more into single particles or pseudo-single particles, the calcining temperature may be 800°C to 950°C, preferably 800°C to 900°C. If the calcining temperature satisfies the range, a positive electrode material in the form of single particles or pseudo-single particles, having excellent electrochemical properties may be produced. If the calcining temperature is less than 800°C, a positive electrode material in the form of secondary particles is manufactured, and if the calcining temperature exceeds 950°C, the calcining occurs excessively and the layered crystal structure is not properly formed, which may deteriorate the electrochemical characteristics.

In addition, the calcining may be performed for 5 to 35 hours under an oxygen atmosphere. In the present specification, the oxygen atmosphere means an atmosphere including an air atmosphere and containing oxygen sufficient for calcining. In particular, it is preferable to perform the calcining in an atmosphere having a higher oxygen partial pressure than the air atmosphere.

In addition, during preparing the lithium nickel-based oxide of the present invention, it is preferable not to perform a washing process after the calcining. Conventionally, during manufacturing high-Ni NCM-based oxides, it was common to perform a washing process after the calcining in order to reduce the lithium byproduct content. However, if performing the washing process during preparing the single-particle form lithium nickel-based oxide of the present invention, it was found that the surface characteristics of the lithium nickel-based oxide deteriorated during the washing process, which increased the resistance. Therefore, during preparing the lithium nickel-based oxide of the present invention, it is preferable to consume the residual lithium on the surface of the lithium nickel-based oxide through a coating layer formation process without performing washing. If the lithium nickel-based oxide is prepared in this way without washing, the increase in resistance due to surface defects may be suppressed.

## Positive Electrode

Next, the positive electrode according to the present invention will be described.

The positive electrode according to the present invention includes the positive electrode material described above, and the preferred orientation index according to Equation 1 above may be 1.2 or more and 1.8 or less, preferably 1.6 or less, and more preferably 1.3 or less. As described above, if the preferred orientation index is 1.8 or less, the positive electrode may contribute to improving the output of a battery. However, considering that the positive electrode material is a single-particle form, the preferred orientation index is 1.2 or more.

Meanwhile, I'(003)/I'(104) of Equation 1 may be 1.2 to 2.9, preferably 1.2 to 2.6, and more preferably 1.2 to 1.55. I'(003)/I'(104) of Equation 1 may represent the preferred orientation degree of the positive electrode. That is, the larger the I'(003)/I'(104) value, the higher the preferred orientation, and the smaller the value, the lower the preferred orientation. As described above, considering that the positive electrode including the single-particle form positive electrode material basically has a large preferred orientation, it is preferable that the I'(003)/I'(104) value of Equation 1 is within the above-described range.

Specifically, the positive electrode includes a positive electrode current collector, and a positive electrode mixture layer provided on the positive electrode current collector and including the positive electrode material. Since the positive electrode material has been described above, the description of a positive electrode material powder will be omitted, and the components excluding the positive electrode material will be described below.

In the positive electrode, the positive electrode current collector is not particularly limited as long as it does not cause a chemical change in a battery and is conductive, for example, stainless steel, aluminum, nickel, titanium, fired carbon, or aluminum or stainless steel, surface-treated with carbon, nickel, titanium, silver, or the like. In addition, the positive electrode current collector may typically have a thickness of 3 to 500 $\mu$m, and may form fine irregularities on the surface of the positive electrode current collector to increase the adhesive strength of the positive electrode material powder. For example, various forms such as a film, sheet, foil, net, porous body, foam, and non-woven fabric may be used.

In addition, the positive electrode mixture layer may include a conductive material and a binder together with the positive electrode material described above.

Meanwhile, the porosity of the positive electrode mixture layer may be 10% to 32%, preferably 14% to 28%. If the porosity is low, a conductive path is appropriately formed, which has the advantage of low resistance and high capacity achievement, but the low porosity may result in increased orientation and lower output characteristics. Therefore, the porosity of the mixture layer is preferably within the above-mentioned range.

Here, the porosity means a value calculated by Equation 3 below.

$$\text{Porosity of positive electrode mixture layer (\%)} = ((\text{true density of positive electrode material - electrode density})/\text{true density of positive electrode material}) \times 100 \qquad \text{[Equation 3]}$$

In Equation 3, the electrode density is a value calculated by Equation 4 below.

$$\text{Electrode density} = (\text{weight of positive electrode - weight of positive electrode current collector})/(a \times b \times c) \qquad \text{[Equation 4]}$$

In Equation 4, a, b, and c are the width, length, and height, respectively, measured after separating the positive electrode current collector from the positive electrode.

Meanwhile, the positive electrode material may be typically included in an amount of 80 wt% to 99 wt%, preferably 90 wt% to 98 wt%, and more preferably 95 wt% to 97 wt% based on the total weight of the positive electrode mixture layer.

The conductive material is used to impart conductivity to the electrode, and may be used without special limitations in a battery to be formed, as long as it does not cause a chemical change and has electronic conductivity. Specific examples include: graphite such as natural graphite or artificial graphite; carbon black such as acetylene black, Ketjen black, channel black, furnace black, lamp black, and thermal black; carbon-based materials such as carbon fibers and carbon nanotubes; metal powders or metal fibers of copper, nickel, aluminum, and silver; conductive whiskers of zinc oxide and potassium titanate; conductive metal oxides such as titanium oxide; or conductive polymers such as polyphenylene derivatives, and among them, one alone or a mixture of two or more thereof may be used. The conductive material may be typically included in an amount of 0.5 wt% to 20 wt%, preferably 1 wt% to 10 wt%, and more preferably 1 wt% to 5 wt% based on the total weight of the positive electrode mixture layer.

The binder serves to improve the adhesion between positive electrode particles and the adhesion between the positive electrode and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, and one of them may be used alone or a mixture of two or more thereof may be used. The binder may be included in an amount of 0.5 wt% to 20 wt%, preferably 1 wt% to 10 wt%, and more preferably 1 wt% to 5 wt% based on the total weight of the positive electrode mixture layer.

The positive electrode may be manufactured according to the conventional positive electrode manufacturing method. For example, the positive electrode may be manufactured by mixing positive electrode powder, a binder, and/or a conductive material in a solvent to prepare a positive electrode slurry, applying the positive electrode slurry on a positive electrode current collector, and then drying and rolling.

The solvent may be a solvent generally used in the relevant technical field, and may include dimethyl sulfoxide (DMSO), isopropyl alcohol, N-methylpyrrolidone (NMP), acetone, or water, and one of them may be used alone or a mixture of two or more thereof may be used. The amount of the solvent used is sufficient if dissolving or dispersing the positive electrode powder, conductive material, and binder in consideration of the coating thickness and producing yield of the slurry, and to have a viscosity that may exhibit excellent thickness uniformity when applying the positive electrode thereafter.

Alternatively, the positive electrode may be manufactured by casting the positive electrode slurry on a separate support, and laminating a film obtained by peeling off from the support onto a positive electrode current collector.

## Lithium Secondary Battery

Next, a lithium secondary battery according to the present invention will be described.

The lithium secondary battery specifically includes a positive electrode, a negative electrode including a negative electrode active material, a separator interposed between the positive electrode and the negative electrode and an electrolyte. Since the positive electrode is the same as described above, a detailed description will be omitted, and only the remaining components will be specifically described below.

In addition, the lithium secondary battery may optionally further include a battery container that accommodates an electrode assembly of the positive electrode, the negative electrode, and the separator, and a sealing member that seals the battery container.

In the lithium secondary battery, the negative electrode includes a negative electrode current collector and a negative electrode mixture layer provided on the negative electrode current collector.

The negative electrode current collector is not particularly limited as long as it has high conductivity without causing chemical changes in a battery, and for example, copper, stainless steel, aluminum, nickel, titanium, fired carbon, copper or stainless steel, surface-treated with carbon, nickel, titanium, silver, or the like, an aluminum-cadmium alloy, or the like may be used. In addition, the negative electrode current collector may typically have a thickness of 3 $\mu$m to 500 $\mu$m, and, like the positive electrode current collector, may form fine irregularities on the surface of the current collector to strengthen the bonding force of the negative electrode active material. For example, various forms such as a film, sheet, foil, net, porous body, foam and non-woven fabric may be used.

The negative electrode mixture layer optionally includes a binder and a conductive material together with the negative electrode active material.

A compound capable of reversible intercalation and deintercalation of lithium may be used as the negative electrode active material. Specific examples include: carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, and Al alloy; metal oxides capable of doping and dedoping lithium, such as $SiO_\beta$ ($0<\beta<2$), $SnO_2$, vanadium oxide, and lithium vanadium oxide; or composites including the metallic compound and carbonaceous material, such as Si-C composites and Sn-C composites, and one of them or a mixture of two or more thereof may be used.

In an embodiment of the present invention, the negative electrode active material may be graphite, a Si-containing material, or a mixture thereof, specifically, graphite, and more specifically, a mixture of artificial graphite and natural graphite. In addition, a metallic lithium thin film may be used as the negative electrode active material. The negative electrode active material may be included in an amount of 80 wt% to 99 wt% based on the total weight of the negative electrode mixture layer.

The binder is a component that assists in bonding among the conductive material, the active material, and the current collector, and is typically added in an amount of 0.1 wt% to 10 wt% based on the total weight of the negative electrode mixture layer. Examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene-butadiene rubber, nitrile-butadiene rubber, fluoro rubber, and various copolymers thereof.

The conductive material is a component for further improving the conductivity of the negative electrode active material, and may be added in an amount of 10 wt% or less, preferably 5 wt% or less based on the total weight of the negative electrode mixture layer. The conductive material is not particularly limited as long as it has conductivity without causing a chemical change in a battery, and examples thereof include: graphite such as natural graphite and artificial graphite; carbon black such as acetylene black, Ketjen black, channel black, furnace black, lamp black, and thermal black; conductive fibers such as carbon fiber and metal fiber; fluorinated carbon; metal powders such as aluminum or nickel powder; conductive whiskers of zinc oxide or potassium titanate; conductive metal oxides such as titanium oxide; and conductive materials such as polyphenylene derivatives.

The negative electrode mixture layer may be manufactured by applying and drying a negative electrode composite prepared by dissolving or dispersing a negative electrode active material and optionally a binder and a conductive material in a solvent on a negative electrode current collector, or by casting the negative electrode composite on a separate support, and then laminating a film obtained by peeling off from the support, on a negative electrode current collector.

Meanwhile, in the lithium secondary battery, the separator separates the negative electrode and the positive electrode and provides a passage for lithium ions to move, and a separator usually used as in a lithium secondary battery may be used without any special restrictions, and in particular, a separator that has low resistance to ion movement of the electrolyte and excellent electrolyte moisture retention ability is preferable. Specifically, a porous polymer film, for example, a porous polymer film made of a polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof, may be used. In addition, a common porous nonwoven fabric, for example, a nonwoven fabric made of high-melting-point glass fibers, polyethylene terephthalate fibers, or the like may be used. In addition, a coated separator containing a ceramic component or a polymer material may be used to secure heat resistance or mechanical strength, and may optionally be used in a single-layer or multi-layer structure.

In addition, the electrolyte used in the present invention may include, but is not limited to, an organic liquid electrolyte, an inorganic liquid electrolyte, a solid polymer electrolyte, a gel-type polymer electrolyte, a solid inorganic electrolyte, a molten inorganic electrolyte, or the like that may be used in the manufacture of a lithium secondary battery.

Specifically, the electrolyte may include an organic solvent and a lithium salt.

The organic solvent may be used without any particular limitation as long as it may act as a medium through which ions involved in the electrochemical reaction of a battery may move. Specifically, the organic solvent may include: ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R represents a linear, branched, or cyclic hydrocarbon group having 2 to 20 carbon atoms and may include a double-bonded aromatic ring or an ether bond); amides such as dimethylformamide; dioxolanes such as 1,3-dioxolane; and sulfolanes. Among them, the carbonate-based solvent is preferable, and a mixture of a cyclic carbonate (e.g., ethylene carbonate or propylene carbonate) having high ionic conductivity and high dielectric constant that may improve the charge and discharge performance of the battery, and a linear carbonate-based compound having low viscosity (e.g., ethyl methyl carbonate, dimethyl carbonate, or diethyl carbonate) is more preferable.

The lithium salt may be used without special restrictions as long as it is a compound that may provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may use $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt may preferably be within a range of 0.1 to 4.0 M. If the concentration of the lithium salt is within the range, the electrolyte may have appropriate conductivity and viscosity and may exhibit excellent electrolyte performance, and lithium ions may move effectively.

In addition to the electrolyte components, the electrolyte may further include one or more additives such as, for example, a haloalkylene carbonate-based compound such as difluoroethylene carbonate, pyridine, triethyl phosphite, triethanolamine, a cyclic ether, ethylene diamine, n-glyme, hexamethylphosphate triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of a battery, suppressing battery capacity decrease, and improving the discharge capacity of a battery. In this case, the additives may be included in an amount of 0.1 wt% to 5 wt% with respect to the total weight of the electrolyte.

The external appearance of the lithium secondary battery of the present invention is not particularly limited, but may be a cylindrical type using a can, prismatic type, pouch type, or coin type.

As described above, since the lithium secondary battery including the positive electrode powder according to the present invention stably exhibits high-temperature performance, it may be used not only as a battery cell used as a power source for small devices such as mobile phones, laptop computers, and digital cameras, but may also be preferably used as a unit cell of a battery module for medium- and large-sized devices including a plurality of battery cells.

Examples of the medium- and large-sized devices include, but are not limited to, power tools, electric vehicles, hybrid electric vehicles, plug-in hybrid electric vehicles, and power storage systems.

According to another embodiment of the present invention, a battery module including the lithium secondary battery as a unit cell, and a battery pack including the same are provided.

Hereinafter, examples of the present invention will be described in detail so that those skilled in the art to which the present invention pertains may easily practice the present invention.

**MODE FOR CARRYING OUT THE INVENTION**

**[Examples: Preparation of Positive Electrode Active Material]**

**Example 1**

A precursor having a composition represented by $Ni_{0.955}CO_{0.030}Mn_{0.010}Al_{0.005}(OH)_2$ and $D_{50}$ = 3.4 $\mu$m, LiOH, $Y_2O_3$ and $ZrO_2$ were added to a Henschel mixer (700 L) and mixed at a central speed of 400 rpm for 20 minutes. In this case, LiOH was added in an amount such that the molar ratio of Li: (Ni+Co+Mn+Al) was 1.05: 1, and $Y_2O_3$ and $ZrO_2$ were added in amounts such that the weights of Y and Zr were 500 ppm and 2,000 ppm, respectively, based on the total weight of a lithium nickel-based oxide finally obtained. The mixed powder was added to an alumina crucible having a size of 330 mm x 330 mm and calcined at 830°C for 12 hours in an oxygen ($O_2$) atmosphere, thereby producing a positive electrode material powder.

**Example 2**

A positive electrode material powder was produced in the same manner as in Example 1, except that $Y_2O_3$ and $ZrO_2$ were added in amounts such that the weight of Y and Zr was 400 ppm and 1,500 ppm, respectively, based on the total weight of a lithium nickel-based oxide finally obtained.

**Comparative Example 1**

A positive electrode material powder having a composition of $Li[Ni_{0.955}CO_{0.030}Mn_{0.010}Al_{0.005}]O_2$ was produced in the same manner as in Example 1, except that $Y_2O_3$ and $ZrO_2$ were not added.

**Comparative Example 2**

A positive electrode material powder was produced in the same manner as in Example 1, except that $ZrO_2$ was not added.

**Comparative Example 3**

A positive electrode material powder was produced in the same manner as in Example 1, except that $Y_2O_3$ was not added.

**Comparative Example 4**

A positive electrode material powder was produced in the same manner as in Example 1, except that $Y_2O_3$ and $ZrO_2$ were added in amounts such that the weight of Y and Zr were 1,000 ppm and 3,000 ppm, respectively, based on the total weight of a lithium nickel-based oxide finally obtained.

**Comparative Example 5**

A positive electrode material powder was produced in the same manner as in Example 1, except that $Y_2O_3$ and $ZrO_2$ were added in amounts such that the weight of Y and Zr were 1,000 ppm and 4,000 ppm, respectively, based on the total weight of a lithium nickel-based oxide finally obtained.

**[Experimental Examples]**

**Experimental Example 1. Evaluation of Positive Electrode Material Properties**

**(1) Confirmation of Doping Content**

The contents of Y and Zr in each of the positive electrode material powders produced in the Examples and Comparative Examples were measured using an inductively coupled plasma optical emission spectrometer (ICP-OES; Optima 7300DV, PerkinElmer), and the contents of Y and Zr relative to the total weight and total moles of the lithium nickel-based oxide were calculated. Using the contents and the doping yield, the composition ratio of each element in the lithium nickel-based oxide was reversely calculated and shown in Table 1 below.

**(2) $D_{50}$ and SEM Observation**

0.1 g of each of the positive electrode material powders produced in the Examples and Comparative Examples was dispersed in a dispersion medium, and the dispersion was introduced into a laser diffraction particle size measuring device (S-3500 from Microtrac Co.) and irradiated with ultrasonic waves of about 28 kHz at an output of 60 W to measure the $D_{50}$ of each positive electrode material powder. The measurement results are shown in Table 1 below.

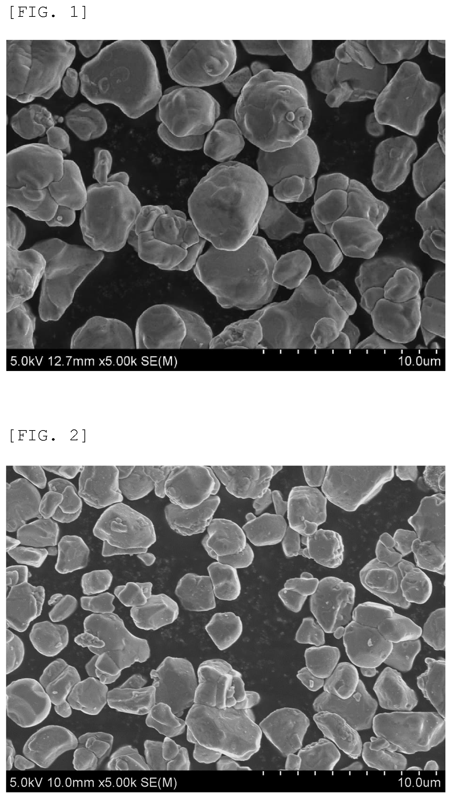

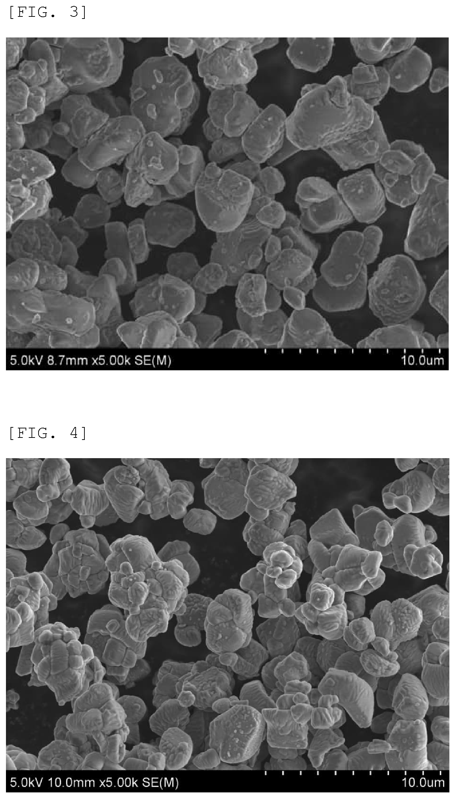

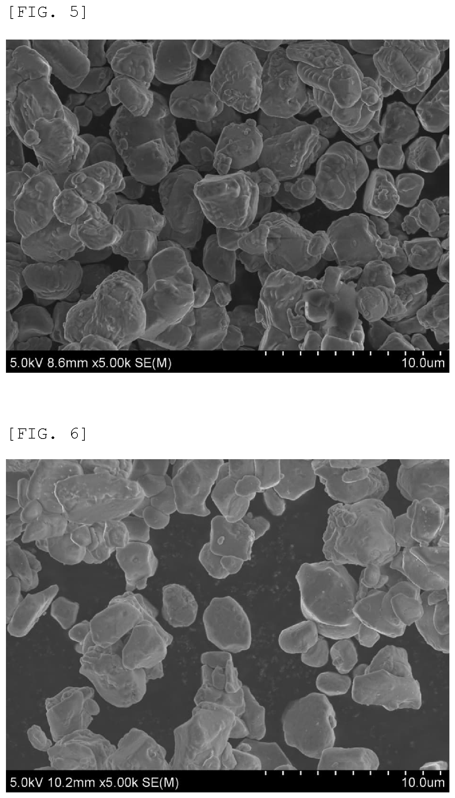

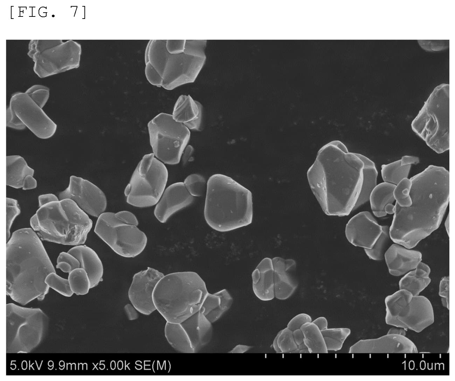

In addition, SEM images of the positive electrode material powders produced in Examples 1 and 2 and Comparative Examples 1 to 5 were obtained using a scanning electron microscope and are attached in FIGS. 1 to 7.

**(3) Measurement on Degree of Single Particlization**

Each of the positive electrode material powders produced in the Examples and Comparative Examples, carbon black, and a PVDF binder were mixed in a weight ratio of 95:2:3 in N-methylpyrrolidone to prepare an electrode slurry. The electrode slurry was applied to one side of an aluminum current collector and dried at 130°C to prepare an electrode for EBSD analysis. No rolling was performed.

The electrode was cut into cross-sections using an ion milling device (HITACHI IM-5000, acceleration voltage 6 kV), and EBSD analysis was performed on the electrode cross-sections using an FE-SEM (JEOL JSM7900F) equipped with a backscatter electron diffraction pattern analyzer (EBSD). The EBSD analysis was performed under the conditions of an acceleration voltage of 15 kV, a WD of 15 mm, and a scale with a total number of grains of approximately 400+/-10.

The diameter of each grain observed in each electrode cross-section was measured through EBSD analysis, and 1/2 of the maximum diameter of the measured grain was used as a grain radius, and the arithmetic mean of the diameters of the measured grains was used as an average grain diameter. In addition, the grain radius and the $D_{50}$ measured in (1) were substituted into [Equation 2] above to calculate the degree of single particlization. The measurement results are shown in Table 1 below.

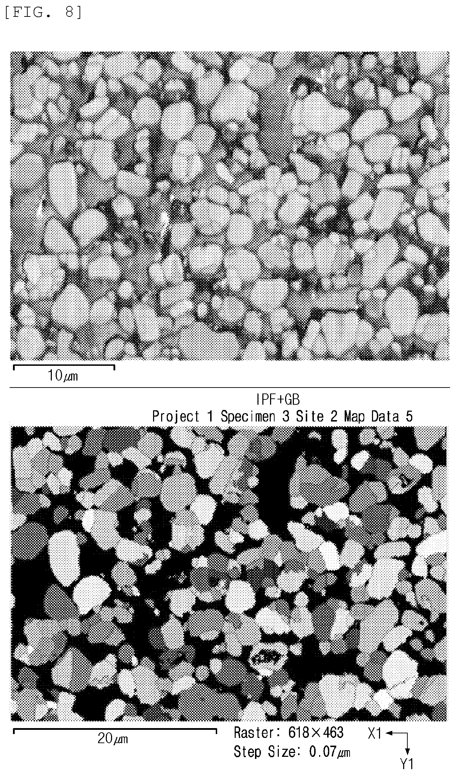

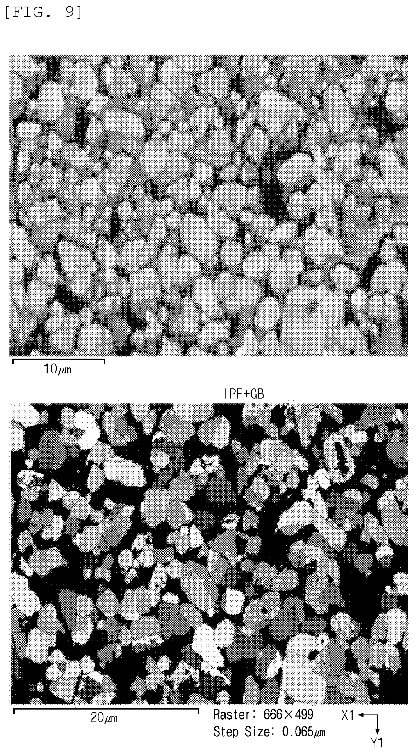

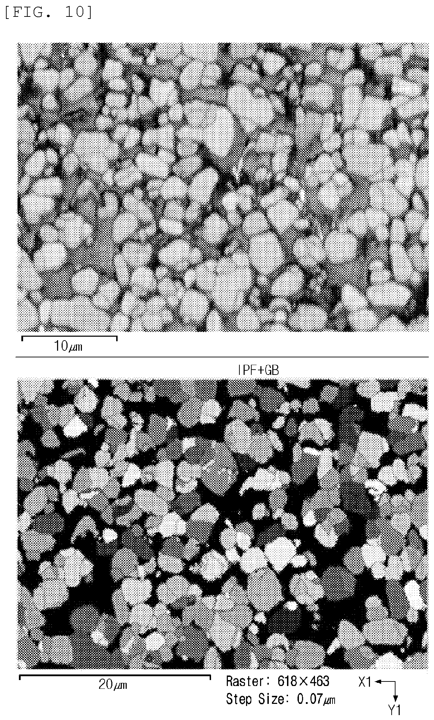

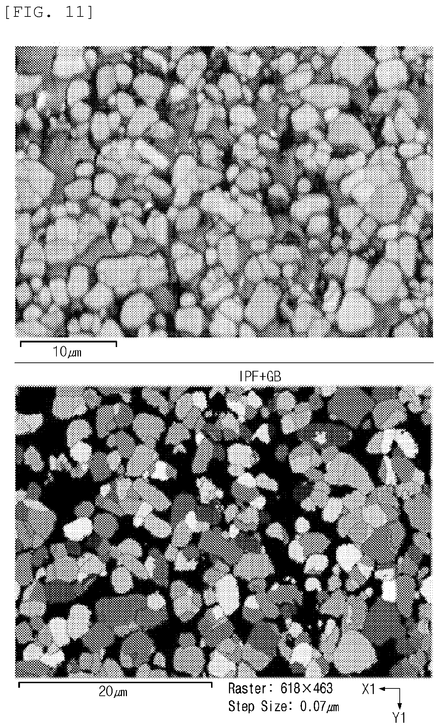

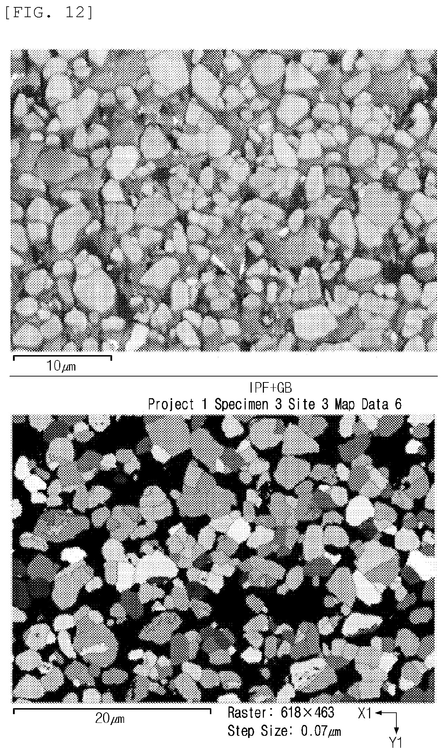

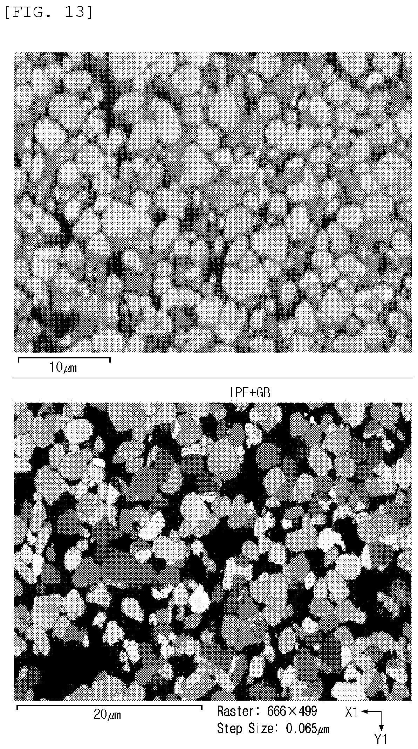

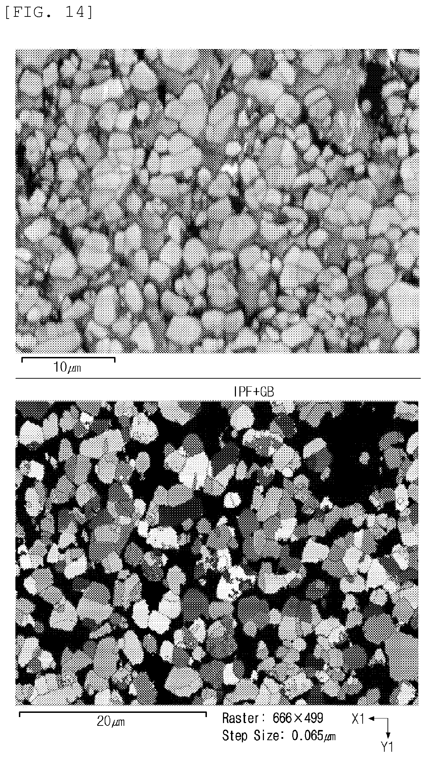

In addition, FIGS. 8 to 14 show EBSD maps of electrode cross-sections manufactured using the positive electrode material powders of Examples 1 and 2 and Comparative Examples 1 to 5, respectively.

[Table 1]

| | Doping element content (ppm) | | Doping element content (mol%) | | NCMA composition (mol%) | | | | Posi tive elec trod e mate rial powd er $D_{50}$ [$\mu$m] | Aver age grai n diam eter [$\mu$m] | Degr ee of sin gle par tic liz ati on of Equ ati on 2 |
|---|---|---|---|---|---|---|---|---|---|---|---|
| | Y | Zr | Y | Zr | Ni | Co | Mn | Al | | | |
| Exampl e 1 | 500 | 2, 00 0 | 0.05 00 | 0.21 00 | 95.2 517 | 2.99 22 | 0.99 74 | 0.49 87 | 3.84 | 1.62 | 3.4 |
| Exampl e 2 | 400 | 1,50 0 | 0.04 00 | 0.16 00 | 95.3 090 | 2.99 40 | 0.99 80 | 0.49 90 | 3.72 | 1.59 | 3.34 |
| Compar ative Exampl e 1 | - | - | - | - | 95.5 | 3.0 | 1.0 | 0.5 | 3.55 | 1.10 | 1.6 |
| Compar ative Exampl e 2 | 500 | - | 0.05 00 | - | 95.4 5225 | 2.99 850 | 0.99 950 | 0.49 975 | 3.68 | 1.22 | 1.8 |
| Compar ative Exampl e 3 | - | 2, 00 0 | - | 0.21 00 | 95.2 9945 | 2.99 370 | 0.99 790 | 0.49 895 | 4.02 | 1.54 | 3.2 |
| Compar ative Exampl e 4 | 1, 00 0 | 3, 00 0 | 0.10 00 | 0.32 00 | 95.0 989 | 2.98 74 | 0.99 58 | 0.49 79 | 4.08 | 1.74 | 3.63 |
| Compar ative Exampl e 5 | 1, 00 0 | 4, 00 0 | 0.10 00 | 0.43 00 | 94.9 9385 | 2.98 41 | 0.99 47 | 0.49 735 | 4.14 | 1.82 | 3.9 |

**Experimental Example 2. Measurement of Preferred Orientation Index of Positive Electrode**

**(1) X-ray Diffraction Analysis of Positive Electrode Material Powder**

Each of the positive electrode material powders produced in the Examples and Comparative Examples was placed in a holder in an XRD measuring device (Bruker D8 Endeavor), and the surface was evened out using a slide glass so that the sample height was the same as the edge of the holder, and X-ray diffraction analysis was performed under the conditions described above. However, since a pressure was applied to the powder during the surface evening process, which may result in a preferred orientation, a back loading holder was used to analyze the sample on the opposite side to which the pressure was applied for prevention. The measured peak intensities of the (104) plane and (003) plane are listed in Table 2 below.

**(2) X-ray Diffraction Analysis of Positive Electrode**

Each of the positive electrode material powders produced in the Examples and Comparative Examples, carbon black, and a PVDF binder were mixed in a weight ratio of 95:2:3 in N-methylpyrrolidone to prepare a positive electrode slurry. The positive electrode slurry was applied to one side of a 15 $\mu$m thick aluminum current collector to form a positive electrode mixture layer, and then dried at 130°C, and rolled under the condition that the porosity of the positive electrode mixture layer became 24% to manufacture a positive electrode.

The manufactured positive electrode was cut to a size of a sample holder to make a specimen, and the specimen was attached to a glass plate using double-sided tape so as not to come off, and then fixed to a PMMA holder in an XRD measuring device (Bruker D8 Endeavor) using rubber clay. X-ray diffraction analysis was performed under the conditions described above. The measured peak intensities of the (104) plane and (003) plane, and the preferred orientation index according to [Equation 1] calculated by reflecting the peak intensities are listed in Table 2 below.

[Table 2]

|  | I(003)/I(10 4) | I'(003)/I'( 104) | Preferred orientation index of Equation 1 |
|---|---|---|---|
| Example 1 | 1.20 | 1.5 | 1.25 |
| Example 2 | 1.19 | 1.44 | 1.21 |
| Comparative Example 1 | 1.21 | 1.597 | 1.32 |
| Comparative Example 2 | 1.22 | 1.647 | 1.35 |
| Comparative Example 3 | 1.21 | 2.674 | 2.21 |
| Comparative Example 4 | 1.29 | 1.41 | 1.09 |
| Comparative Example 5 | 1.43 | 2.83 | 1. 98 |

**Experimental Example 3. Monocell Performance Evaluation**

**(1) Manufacturing of Monocell**

Positive electrodes to which the positive electrode material powders of the Examples and Comparative Examples were applied were manufactured in the same manner as (2) of Experimental Example 2.

Meanwhile, a mixture of natural graphite and artificial graphite in a weight ratio of 50:50, as a negative active material, SBR and CMC as binders, and Super C as a conductive material were mixed in a weight ratio of 95.6:1.1:2.3:1.0 in water as a solvent to prepare a negative electrode slurry having a solid content of 60 wt%. The negative electrode slurry was applied to both sides of a 10 $\mu$m thick copper current collector, dried at 130°C, and then rolled between two rolling rolls to manufacture a negative electrode.

An electrode assembly was manufactured by interposing a 15 $\mu$m thick porous polyethylene-based separator between the manufactured positive and negative electrodes, and then inserted into a pouch-type battery case, and an electrolyte was injected to manufacture a monocell. In this case, a solution of 1M LiPF$_6$ dissolved in a mixed organic solvent of ethylene carbonate (EC): ethyl methyl carbonate (EMC) in a volume ratio of 1:2 was used as the electrolyte.

**(2) High-temperature Lifespan Evaluation**

An activation (formation) process was performed on each monocell manufactured in the above (1), and then the PNE-0506 charger/discharger (manufacturer: PNE Solution Co., Ltd.) was used to charge the cell at 0.5 C (standard capacity 1.0 C = 200 mAh/g) at 45°C to 4.25 V under constant current-constant voltage conditions, and discharged to 2.5 V at 1.0 C under constant current. The charge and discharge were considered as 1 cycle, and the initial discharge capacity was measured after 1 cycle, and then the discharge capacity was measured while repeating the same charge and discharge up to 300 cycles. Based on this, the capacity retention compared to the initial discharge capacity was calculated and shown in Table 3.

### (3) Rate Capability Evaluation

For each monocell manufactured in (1) above, an activation (formation) process was performed, and then the PNE-0506 charger/discharger (manufacturer: PNE Solution Co., Ltd.) was used to charge the monocell at 0.5 C (standard capacity 1.0 C = 200 mAh/g) at 45°C to 4.25 V under constant current-constant voltage conditions, and discharged at 0.1 C to 2.5 V under constant current. After that, the discharge rate was changed to 2.0 C after charging under the same conditions, and the discharge capacity was measured. The rate capability measured at 2.0 C compared to 0.1 C is shown in Table 3 below.

[Table 3]

|  | Rate capability [%] | Capacity retention [%] |
|---|---|---|
| Example 1 | 91.8 | 92.5 |
| Example 2 | 92.2 | 92.3 |
| Comparative Example 1 | 92.1 | 81.5 |
| Comparative Example 2 | 91.9 | 82.6 |
| Comparative Example 3 | 85.8 | 91.4 |
| Comparative Example 4 | 88.3 | 90.2 |
| Comparative Example 5 | 87.5 | 93.1 |

Through Table 3, it can be confirmed that the cells including the positive electrodes of Examples 1 and 2, which include positive electrode materials doped with Y and Zr and have a preferred orientation index of 1.2 to 1.8, have excellent rate characteristics and capacity retention. On the other hand, in the cases of the positive electrodes including the positive electrode materials of Comparative Example 1 and Comparative Example 2, which do not include both Y and Zr, and which are doped only with Y, the effect of improving the capacity retention of the cell is significantly reduced compared to Examples 1 and 2, even though the preferred orientation index is in the range of 1.2 to 1.8.

In addition, it can be confirmed that the cell including the positive electrode of Comparative Example 3, which has a preferred orientation index greater than 1.8, has a rate characteristic significantly reduced compared to Examples 1 and 2.

In addition, even if the positive electrode material doped with Y and Zr is included, in the case of a positive electrode having a preferred orientation index of less than 1.2, such as in Comparative Example 4, the effect of improving the rate characteristics and capacity retention of the cell is significantly reduced compared to Examples 1 and 2, and in the case of a positive electrode having a preferred orientation index of more than 1.8, such as in Comparative Example 5, the effect of improving the rate characteristics of the cell is significantly reduced compared to Examples 1 and 2.

### Claims

1.    A positive electrode comprising a positive electrode material comprising a single-particle form lithium nickel-based oxide comprising Y and Zr,

the positive electrode having a preferred orientation index of 1.2 to 1.8 according to the following Equation 1:

[Equation 1]

$$Preferred\ orientation\ index = \frac{I'(003)/I'(104)}{I(003)/I(104)}$$

in Equation 1,
I(003)/I(104) is a ratio of the peak intensity I(003) of a (003) plane to the peak intensity I(104) of a (104) plane, obtained by XRD analysis of the positive electrode material, and
I'(003)/I'(104) is a ratio of the peak intensity I'(003) of a (003) plane to the peak intensity I'(104) of a (104) plane, obtained by XRD analysis of the positive electrode.

2. The positive electrode according to claim 1, wherein the positive electrode material has a degree of single particlization of 2.0 to 4.5 according to the following Equation 2:

[Equation 2]

$$Degree\ of\ single\ particlization = \frac{\sum_{i=1}^{n}\frac{4\pi}{3} \times R_i^3}{n}$$

in Equation 2,
$R_i$ is the radius of an i-th grain, measured by subjecting an electrode manufactured by applying the positive electrode material to ion milling and then analyzing the electrode by electron backscatter diffraction (EBSD), where although the value is measured in a $\mu$m unit, the value substituted into Equation 2 is a unitless number that does not include a unit, and
n is a total number of grains measured through the EBSD analysis and is 350 to 450.

3. The positive electrode according to claim 1, wherein $D_{50}$ of the positive electrode material is 1.0 $\mu$m to 6.0 $\mu$m.

4. The positive electrode according to claim 1, wherein Y is comprised in a weight of 200 ppm to 800 ppm based on a total weight of the lithium nickel-based oxide.

5. The positive electrode according to claim 1, wherein Zr is comprised in a weight of 1,000 ppm to 3,000 ppm based on a total weight of the lithium nickel-based oxide.

6. The positive electrode according to claim 1, wherein the lithium nickel-based oxide has a composition of the following Formula 1:

[Formula 1]     $Li_aNi_{1-x-y}Co_xM1_yM2_wO_2$

in Formula 1,

$1.0 \leq a \leq 1.5$, $0 \leq x \leq 0.2$, $0 \leq y \leq 0.2$, $0 < w \leq 0.1$, and $0 < x+y \leq 0.2$,
M1 is one or more selected from the group consisting of Mn and Al, and
M2 is two or more selected from the group consisting of Y, Zr, Ba, Ca, Ti, Mg, Ta, Nb, and Mo, where Y and Zr are necessarily included.

7. The positive electrode according to claim 1, wherein I(003)/I(104) of Equation 1 is 1.0 to 1.6.

8. The positive electrode according to claim 1, wherein I' (003)/I' (104) of Equation 1 is 1.2 to 2.9.

9. The positive electrode according to claim 1, wherein

the positive electrode comprises a positive electrode current collector; and a positive electrode mixture layer provided on the positive electrode current collector and comprising the positive electrode material, and

a porosity of the positive electrode mixture layer is 10% to 32%.

10. A lithium secondary battery comprising: the positive electrode according to claim 1; a negative electrode comprising a negative electrode active material; a separator disposed between the positive electrode and the negative electrode; and an electrolyte.

[FIG. 1]

[FIG. 2]

[FIG. 3]

[FIG. 4]

[FIG. 5]

5.0kV 8.6mm x5.00k SE(M)    10.0um

[FIG. 6]

5.0kV 10.2mm x5.00k SE(M)    10.0um

[FIG. 7]

[FIG. 8]

10 μm

IPF+GB
Project 1 Specimen 3 Site 2 Map Data 5

20 μm

Raster: 618×463     X1
Step Size: 0.07 μm
                    Y1

[FIG. 9]

10μm

IPF+GB

20μm

Raster: 666×499
Step Size: 0.065μm

X1

Y1

[FIG. 10]

IPF+GB

Raster: 618×463
Step Size: 0.07μm

[FIG. 11]

10 μm

IPF+GB

20 μm    Raster: 618×463
         Step Size: 0.07 μm

X1 ←
Y1 ↓

[FIG. 12]

10μm

IPF+GB
Project 1 Specimen 3 Site 3 Map Data 6

20μm

Raster: 618×463
Step Size: 0.07μm

X1
Y1

[FIG. 13]

10μm

IPF+GB

20μm　　Raster: 666×499　　X1
Step Size: 0.065μm　　Y1

[FIG. 14]

10μm

IPF+GB

20μm          Raster : 666×499     X1
              Step Size: 0.065μm   Y1

## INTERNATIONAL SEARCH REPORT

| International application No. |
|---|
| **PCT/KR2024/096530** |

| A. | CLASSIFICATION OF SUBJECT MATTER |
|---|---|
| | **H01M 4/131**(2010.01)i; **H01M 4/525**(2010.01)i; **H01M 4/505**(2010.01)i; **H01M 10/052**(2010.01)i; **H01M 4/02**(2006.01)i |

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/052(2010.01); H01M 10/0525(2010.01); H01M 4/36(2006.01); H01M 4/485(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 단입자 (single particle), Y (이트륨, yttrium), Zr (지르코늄, zirconium), 우선 배향 (preferred orientation), 평균지름 (mean diameter), XRD (X-ray Diffraction)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2019-0117199 A (LG CHEM, LTD.) 16 October 2019 (2019-10-16)<br>See abstract; paragraphs [0150]-[0154] and [0157]-[0160]; and claim 1. | 1-10 |
| A | KR 10-2022-0089243 A (POSCO et al.) 28 June 2022 (2022-06-28)<br>See abstract; and claims 1-13. | 1-10 |
| A | ZHOU, G. et al. Al2O3-Coated, Single Crystal Zr/Y co-Doped High-Ni NCM Cathode Materials for High-Performance Lithium-Ion Batteries. Particle & Particle Systems Characterization. 2022, vol. 39, thesis no. 2200061, pp. 1-8.<br>See abstract; pages 1, 2 and 5; and supporting information, page 2, first-second paragraphs. | 1-10 |
| A | KR 10-2023-0033480 A (SAMSUNG SDI CO., LTD.) 08 March 2023 (2023-03-08)<br>See abstract; and claims 1-28. | 1-10 |
| A | US 2020-0203717 A1 (L&F CO., LTD.) 25 June 2020 (2020-06-25)<br>See abstract; and claims 1 and 3-20. | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 February 2025** | **18 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 769 518 A1**

| INTERNATIONAL SEARCH REPORT | International application No. |
| Information on patent family members | **PCT/KR2024/096530** |

| Patent document cited in search report | | | Publication date (day/month/year) | Patent family member(s) | | | Publication date (day/month/year) |
|---|---|---|---|---|---|---|---|
| KR | 10-2019-0117199 | A | 16 October 2019 | CN | 111902978 | A | 06 November 2020 |
| | | | | CN | 111902978 | B | 15 August 2023 |
| | | | | CN | 116364911 | A | 30 June 2023 |
| | | | | DE | 202019005948 | U1 | 01 September 2023 |
| | | | | EP | 3761415 | A1 | 06 January 2021 |
| | | | | EP | 4228032 | A1 | 16 August 2023 |
| | | | | KR | 10-2398689 | B1 | 17 May 2022 |
| | | | | US | 11799066 | B2 | 24 October 2023 |
| | | | | US | 11876210 | B2 | 16 January 2024 |
| | | | | US | 12183913 | B2 | 31 December 2024 |
| | | | | US | 2021-0020902 | A1 | 21 January 2021 |
| | | | | US | 2023-0275209 | A1 | 31 August 2023 |
| | | | | US | 2024-0194852 | A1 | 13 June 2024 |
| | | | | WO | 2019-194510 | A1 | 10 October 2019 |
| KR | 10-2022-0089243 | A | 28 June 2022 | CN | 116648801 | A | 25 August 2023 |
| | | | | EP | 4266423 | A1 | 25 October 2023 |
| | | | | JP | 2024-503799 | A | 29 January 2024 |
| | | | | KR | 10-2580744 | B1 | 19 September 2023 |
| | | | | US | 2024-0047669 | A1 | 08 February 2024 |
| | | | | WO | 2022-139385 | A1 | 30 June 2022 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | JP | 7498233 | B2 | 11 June 2024 |
| | | | | US | 2023-0082796 | A1 | 16 March 2023 |
| US | 2020-0203717 | A1 | 25 June 2020 | KR | 10-1826612 | B1 | 07 February 2018 |
| | | | | US | 11495791 | B2 | 08 November 2022 |
| | | | | WO | 2018-225912 | A1 | 13 December 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230156383

- KR 1020240160276